# EUROPEAN PATENT APPLICATION

(11) **EP 1 791 334 A1**
(43) Date of publication of application: **30.05.2007**
(21) Application number: 06024316.9
(22) Date of filing: 23.11.2006
(51) Int. Cl.: H04M 1/56

(54) **System and method for communicating, displaying and storing remote terminal capabilities**

(30) Priority: 28.11.2005 JP 2005341545; 06.09.2006 JP 2006241815
(71) Applicant: NTT DoCoMo INC., Chiyoda-ku Tokyo 100-6150 (JP)
(72) Inventor: Tanaka, Itsuma, IP Dept, 2-chome Chiyoda-ku Tokyo 100-6150 (JP); Chikura, Hironori, IP Dept, 2-chome Chiyoda-ku Tokyo 100-6150 (JP); Isobe, Tomonori, IP Dept, 2-chome Chiyoda-ku Tokyo 100-6150 (JP); Taniguchi, Nobuchika, IP Dept, 2-chome Chiyoda-ku Tokyo 100-6150 (JP)
(74) Representative: Kuhnen & Wacker

(57) **Abstract**

In a communication system having a plurality of cellular telephones 10 connected on a communication network, and a switching apparatus 13 that manages communication functions usable in the plurality of cellular telephones 10, when the switching apparatus 13 receives a communication request from a cellular telephone 10A on the calling side, the switching apparatus 13 determines communication functions usable in the cellular telephone 10A to notify a cellular telephone 10B on the receiving side, while determining communication functions usable in the cellular telephone 10B to notify the cellular telephone 10A, and the cellular telephones 10A and 10B on the calling side and receiving side display the communication functions usable in the cellular telephone 10B and 10A as the communicating party notified from the switching apparatus 13, while registering the communication functions usable in the cellular telephone 10B and 10A as the communicating party after finishing communication, respectively.

## Description

The present disclosure relates to subject matters contained in Japanese Patent Application No. 2006-241815 filed on September 6, 2006, and No.2005-341545 filed on November 28, 2005, which are expressly incorporated herein by reference in its entireties.

### BACKGROUND OF THE INVENTION

### 1. Field of the Invention

The present invention relates to a communication system and communication function information display method, and more particularly, to a communication system and communication function information display method for displaying information about a communication terminal apparatus of a communicating party in a communication terminal apparatus of a calling party.

### 2. Description of the Prior Art

Conventionally, a communication system is proposed where in order to display information about a communication terminal apparatus (communicating-party terminal apparatus) of a communicating party connected in communication with a communication terminal apparatus (user terminal apparatus) of a user in the user terminal apparatus, the user terminal apparatus inquires of the communicating-party terminal apparatus using the communication to detect the information of the communicating-party terminal apparatus, and the detection information is displayed in the user terminal apparatus (for example, JP 2003-37684).

However, in the above-mentioned communication system, when the user terminal apparatus detects the information of the communicating-party terminal apparatus, the user terminal apparatus needs to perform communication for inquiry and the like with the communicating-party terminal apparatus whenever detecting. Further, to obtain the information of the communicating-party terminal apparatus after finishing the communication, it is necessary to establish communication again. Therefore, for a user using specific service such as videophone service requiring determination of a communication method before starting communication, the user cannot know whether the communicating-party terminal apparatus has the desired communication function unless the user inquires, resulting in a problem that the usability is very poor.

### SUMMARY OF THE INVENTION

It is an object of the invention to provide a communication system and communication function information display method enabling an easy grasp of communication functions usable in a communication terminal apparatus of a communicating party.

A communication system of the invention is a communication system having a plurality of communication terminal apparatuses connected on a communication network, and a management apparatus that manages communication functions usable in the plurality of communication terminal apparatuses, where when the management apparatus receives a communication request from a communication terminal apparatus on the calling side, the management apparatus determines communication functions usable in the communication terminal apparatus on the calling side to notify a communication terminal apparatus on the receiving side, while determining communication functions usable in the communication terminal apparatus on the receiving side to notify the communication terminal apparatus on the calling side, and the communication terminal apparatus on each of the calling and receiving sides displays the communication functions usable in the communication terminal apparatus of the communicating party notified from the management apparatus, while registering the communication functions usable in the communication terminal apparatus of the communicating party after finishingcommunication with the communication terminal apparatus of the communicating party.

According to this constitution, when a communication request is made, the management apparatus notifies the communication functions usable in each of communication terminal apparatuses respectively on the calling and receiving sides to the communication terminal apparatus of the respective communicating party, and the communication functions usable in the communication terminal apparatus of the communicating party are displayed in each of the communication terminal apparatuses. It is thereby possible for the user to easily grasp the communication functions usable in the communication terminal apparatus of the communicating party. Further, since the communication functions usable in the communication terminal apparatus of the communicating party are registered after finishing the communication, the user is capable of grasping the communication functions usable in the communication terminal apparatus of the communicating party also in subsequent communication, and it is thus possible to promote use of the communication functions.

In the communication system of the invention, the communication terminal apparatus on each of the calling and receiving sides preferably displays the communication functions usable in the communication terminal apparatus of the communicating party notified from the management apparatus, using icons. In this case, since the communication functions usable in the communication terminal apparatus of the communicating party are displayed with icons, the user is capable of grasping the communication functions usable in the communication terminal apparatus of the communicating party through intuition.

In the communication system of the invention, the management apparatus preferably notifies the communication terminal apparatus of the communicating party of the communication functions when notification of the communication functions usable in the communication terminal apparatus on the calling side or receiving side is permitted. In this case, it is possible to switch between the presence and absence of notification of the usable communication functions according to an instruction from a user, and it is thus possible to prevent the usable communication functions from being notified to a communicating party having no need of being notified.

Further, in the communication system of the invention, the communication terminal apparatus on the calling side or receiving side may register a communication function usable in the communication terminal apparatus of the communicating party when the communication function is not registered. In this case, when the communication function usable in the communication terminal apparatus of the communicating party has not been registered yet, the communication function is registered. It is thus possible to prevent the communication function usable in the communication terminal apparatus of the communicating party from being registered indiscriminately.

A communication function information display method of the invention is a communication function information display method using a plurality of communication terminal apparatuses connected on a communication network, and a management apparatus that manages communication functions usable in the plurality of communication terminal apparatuses, where when the management apparatus receives a communication request from a communication terminal apparatus on a calling side, the management apparatus determines communication functions usable in the communication terminal apparatus on the calling side to notify a communication terminal apparatus on a receiving side, while displaying the communication functions usable in the communication terminal apparatus on the calling side in the communication terminal apparatus on the receiving side, further determines communication functions usable in the communication terminal apparatus on the receiving side to notify the communication terminal apparatus on the calling side, while displaying the communication functions usable in the communication terminal on the receiving side in the communication terminal apparatus on the calling side, and registers the communication functions usable in the communication terminal apparatus of the communicating party with the communication terminal apparatus on each of the calling and receiving sides after finishing communication.

According to this method, when a communication request is made, the management apparatus notifies the communication functions usable in each of communication terminal apparatuses respectively on the calling and receiving sides to the communication terminal apparatus of the respective communicating party, and the communication functions usable in the communication terminal apparatus of the communicating party are displayed in each of the communication terminal apparatuses. It is thereby possible for the user to easily grasp the communication functions usable in the communication terminal apparatus of the communicating party. Further, since the communication functions usable in the communication terminal apparatus of the communicating party are registered after finishing the communication, the user is capable of grasping the communication functions usable in the communication terminal apparatus of the communicating party also in subsequent communication, and it is thus possible to promote use of the communication functions.

In the communication function information display method of the invention, it is preferable that using icons, the communication functions usable in the communication terminal apparatus of the communicating party notified from the management apparatus are displayed in the communication terminal apparatus on each of the calling and receiving sides. In this case, since the communication functions usable in the communication terminal apparatus of the communicating party are displayed with icons, the user is capable of grasping the communication functions usable in the communication terminal apparatus of the communicating party through intuition.

In the communication function information display method of the invention, the management apparatus preferably notifies the communication terminal apparatus of the communicating party of the communication functions when notification of the communication functions usable in the communication terminal apparatus on the calling side or receiving side is permitted. In this case, it is possible to switch between the presence and absence of notification of the usable communication functions according to an instruction from a user, and it is thus possible to prevent the usable communication functions from being notified to a communicating party having no need of being notified.

Further, in the communication function information display method of the invention, a communication function usable in the communication terminal apparatus of the communicating party may be registered with the communication terminal apparatus on each of the calling and receiving sides when the communication function is not registered. In this case, when the communication function usable in the communication terminal apparatus of the communicating party has not been registered yet, the communication function is registered. It is thus possible to prevent the communication function usable in the communication terminal apparatus of the communicating party from being registered indiscriminately.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.
FIG.1 is a configuration diagramof an entire network to which is applied a communication system according to this embodiment;
FIG.2 is a functional block diagram of a cellular telephone that the communication system according to the above embodiment has;
FIG.3 is a diagram showing an example of telephone directory data registered with an information storage section of the cellular telephone according to the above embodiment;
FIG.4 is a functional block diagram of a switching apparatus that the communication system according to the above embodiment has;
FIG.5 is a diagram illustrating descriptions of a communication function table registered with the information storage section of the switching apparatus according to the above embodiment;
FIG.6 is a sequence diagram to explain the operation when a call is made in the communication system according to the above embodiment;
FIG.7 is another sequence diagram to explain the operation when a call is made in the communication system according to the above embodiment;
FIGs.8A, 8B and 8C are diagrams showing configuration examples of a screen displayed in the display section of the cellular telephone on a calling side in the sequence as shown in FIG.6;
FIGs.9A and 9B are diagrams showing configuration examples of a screen displayed in the display section of the cellular telephone on a receiving side in the sequence as shown in FIG.6;
FIGs.10A and 10B are diagrams to explain descriptions of telephone directory data of the cellular telephone on the receiving side in the cellular telephone on the calling side before and after making a call according to the sequence as shown in FIG.6; and
FIGs.11A and 11B are diagrams to explain descriptions of telephone directory data of the cellular telephone on the calling side in the cellular telephone on the receiving side before and after making a call according to the sequence as shown in FIG.6.

### DESCRIPTION OF THE PREFERRED EMBODIMENTS

An embodiment of the invention will specifically be described below with reference to accompanying drawings.

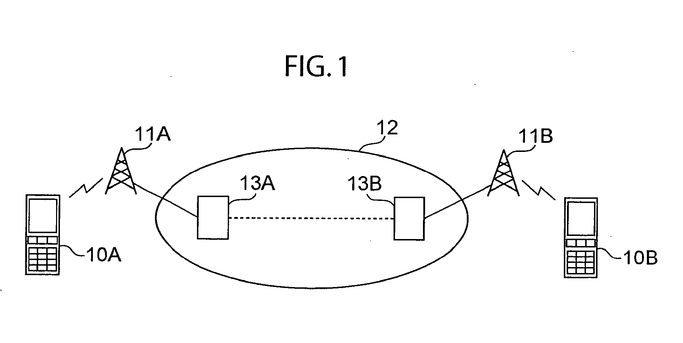

FIG.1 is a configuration diagram of an entire network to which is applied a communication system according to this embodiment. In addition, FIG.1 illustrates a case that communication terminal apparatuses that the communication system has are cellular telephones, but the invention is not limited thereto. Any communication apparatuses such as a personal computer (hereinafter referred to as a "PC"), PDA (Personal Digital Assistance) and the like may be used which have the communication function and display function. Further, it is also possible to use different types of communication apparatuses on the calling and receiving sides.

In the network as shown in FIG.1, for example, when a cellular telephone 10A communicates with a cellular telephone 10B, the cellular telephone 10A connects to a switching apparatus (hereinafter, simply referred to as a "switching apparatus") 13A for cellular telephones provided in a cellular telephone network 12 via a base station 11A associated with current position information of the cellular telephone 10A. Then, a communicationpath is established between the switching apparatus 13A and a switching apparatus 13B associated with current position information of the cellular telephone 10B, and the cellular telephone 10A is thus able to communicate with the cellular telephone 10B via a base station 11B. In addition, the switching apparatus 13 functions as a management apparatus.

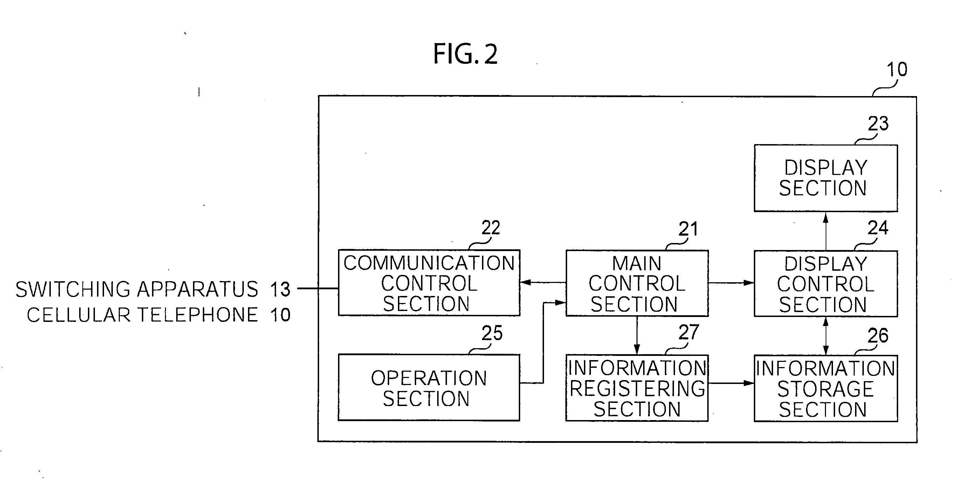

FIG.2 is a functional block diagram of the cellular telephone 10 that the communication system according to this embodiment has. In addition, the configuration of the cellular telephone 10 as shown in FIG.2 is simplified to explain the invention, and the cellular telephone 10 is assumed to have processing functions required of a general cellular telephone.

As shown in FIG.2, the cellular telephone 10 has a main control section 21 that controls the entire apparatus, a communication control section 22 that controls communication with the switching apparatus 13, a communicating-party cellular telephone 10 and the like, a display section 23 that performs various display when the cellular telephone 10 is used, a display control section 24 that controls the display in the display section 23, an operation section 25 that receives an operational input of a user, an information storage section 26 that stores information such as telephone directory data used in originating a call and the like, and an information registering section 27 that registers information with the information storage section 26.

The communication control section 22 controls communication required to make a call to the communicating-party cellular telephone 10, while further controlling communication required to perform the communication using a specific communication function such as a videophone function described later and the like. The display control section 24 controls the display of the display section 23 using the information stored in the information storage section 26, when necessary. Further, the display control section 24 controls the display corresponding to a communication function usable in another cellular telephone 10 for which the communication control section 22 communicates with the switching apparatus 13. The information registering section 27 registers communication functions usable in the communicating-party cellular telephone 10 to which a call is made with the telephone directory data when necessary after finishing the call.

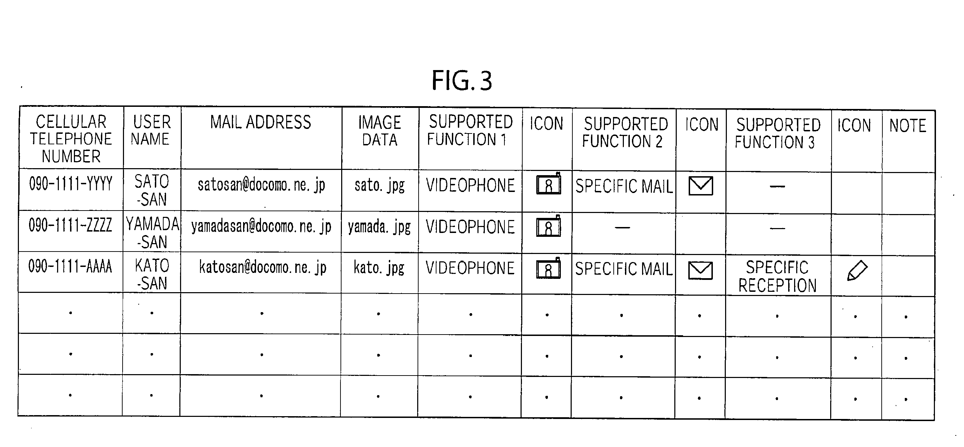

FIG.3 is a diagram illustrating an example of the telephone directory data registered with the information storage section 26 of the cellular telephone 10 according to this embodiment. The telephone directory data is managed in a table. Hereinafter, the table to manage the telephone directory data is referred to as a "telephone directory table". As shown in FIG.3, with the telephone directory table are registered a user name, mail address, image data of the user, supported communication functions, icons corresponding to the communication functions, and note each associated with a cellular telephone number. FIG.3 shows the case of enabling three supported communication functions to be registered, but the number of registrations is capable of being modified as appropriate.

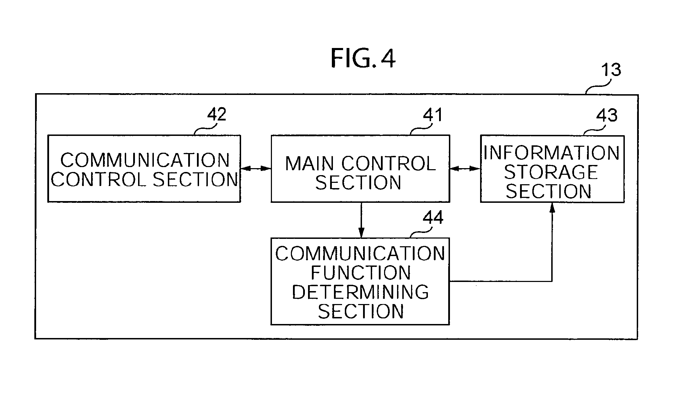

FIG.4 is a functional block diagram of the switching apparatus 13 that the communication system according to this embodiment has. In addition, the configuration of the switching apparatus 13 as shown in FIG.4 is simplified to explain the invention, and the switching apparatus 13 is assumed to have processing functions required of a general switching apparatus.

As shown in FIG.4, the switching apparatus 13 has a main control section 41 that controls the entire apparatus, a communication control section 42 that controls communication with the cellular telephone 10, another switching apparatus 13 of the cellular telephone network 12 and the like, an information storage section 43 that stores information such as a communication function table used for the cellular telephone 10 in originating a call and the like, and a communication function determining section 44 that determines communication functions of the cellular telephone 10 stored in the information storage section 43.

With the information storage section 43 is registered a communication function table with which are registered communication functions usable in all the cellular telephones 10 managed by a communication business operator that operates the cellular telephone network 12. Based on descriptions of the registration of the communication function table, the communication function determining section 44 determines set information of each cellular telephone 10, and a communication functions usable in each cellular telephone 10.

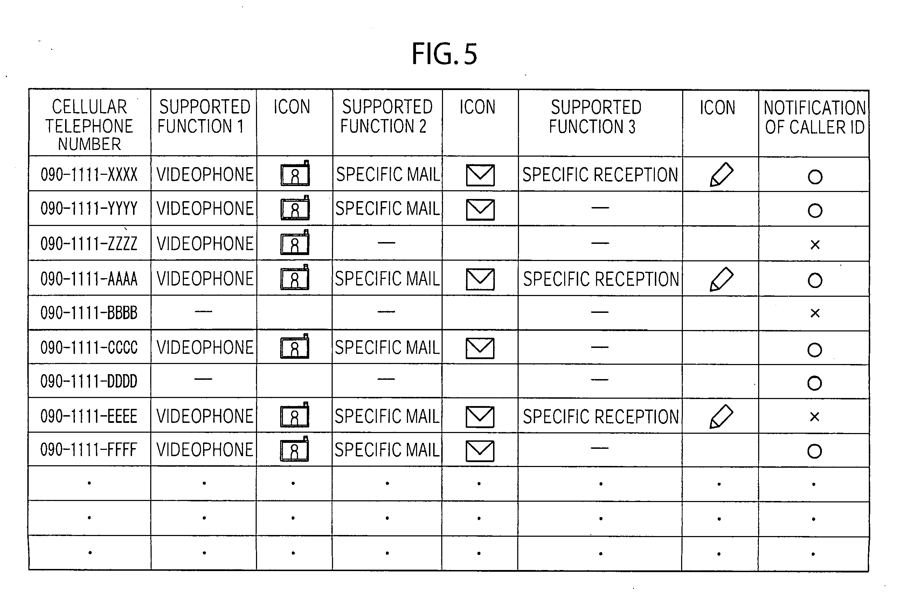

FIG.5 is a diagram illustrating descriptions of the communication function table registered with the information storage section 43 of the switching apparatus 13 according to this embodiment. In addition, FIG.5 shows an example of descriptions of registration, and the descriptions registered with the communication function table are capable of being modified as appropriate.

As shown in FIG.5, with the communication function table are registered communication functions usable in each cellular telephone 10, an icon corresponding to each of the communication functions, and set information (for example, set information related to display of a caller ID) of each cellular telephone 10, in association with a telephone number of each of all the cellular telephones 10 managed by the communication business operator. In addition, as communication functions supported by the cellular telephone 10, FIG.5 shows three functions i.e. videophone function, specific mail function and specific reception function. Herein, the videophone function is a function for talking while seeing moving image data of a user of the communicating party and the like. The specific mail function is, for example, a function for providing an e-mail with specific decoration (for example, "Deco-mail (Trademark)" for varying colors of background and characters). The specific reception function is, for example, a function for adding specific display to an image in receiving a call (for example, "Chaku-moji (Trademark)" for displaying desired characters of an originator in an image in receiving a call). In addition, specific communication functions registered with the communication function table are capable of being modified as appropriate.

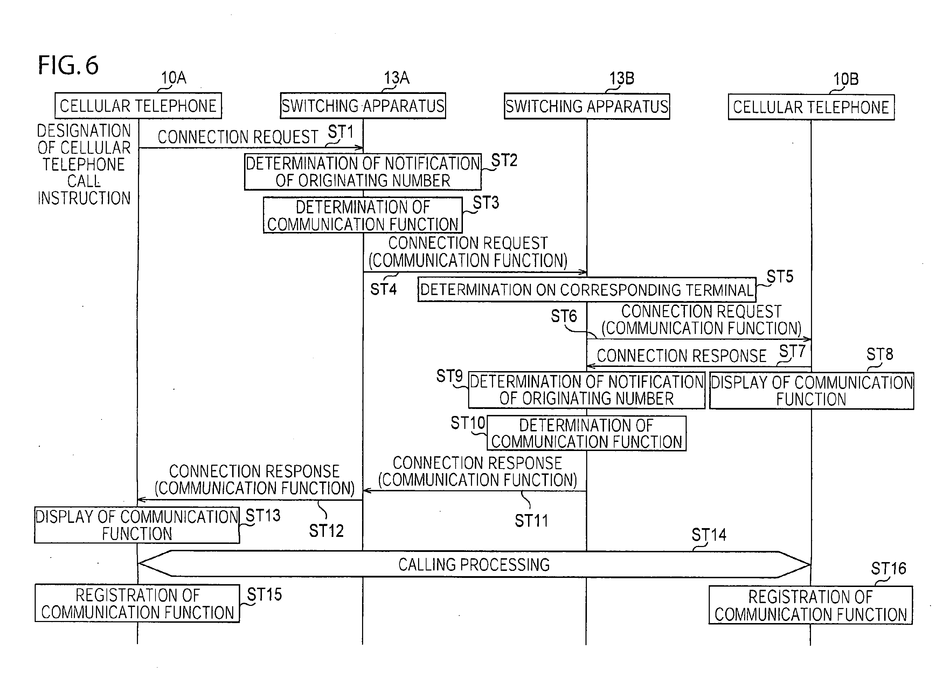

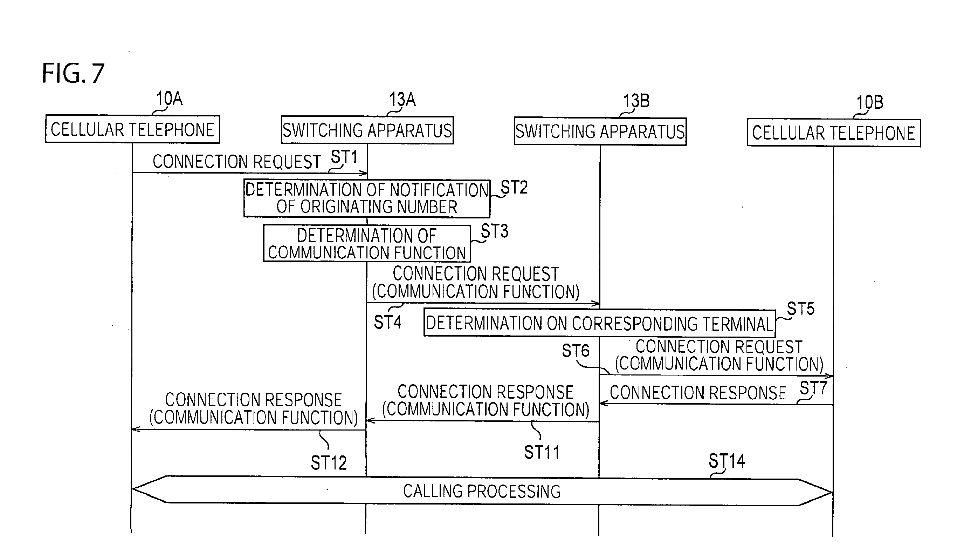

The operation when a call is made in the communication system with the above-mentioned configuration will be described below with reference to FIGs. 6 and 7. FIGs. 6 and 7 are sequence diagrams to explain the operation when a call is made in the communication system according to this embodiment. In particular, FIG.6 shows a sequence when both cellular telephones 10 can display communication functions usable in the other cellular telephone 10, while FIG.7 shows a sequence when a cellular telephone 10B cannot display communication functions usable in another cellular telephone 10. In addition, the case is herein described that the cellular telephone 10A originates a call to the cellular telephone 10B.

In addition, it is assumed in the following descriptions that a telephone number of "090-1111-XXXX" is assigned to the cellular telephone 10A as shown in FIG.1, while a telephone number of "090-1111-YYYY" is assigned to the cellular telephone 10B as shown in FIG.1. It is further assumed that in the telephone directory table of the information storage section 26 of the cellular telephone 10A, a user name of "Sato-san", mail address of satosan@docomo.ne.jp, and image data of the user of the cellular telephone 10B are registered in association with the telephone number of "090-1111-YYYY" of the cellular telephone 10B. It is further assumed that in the telephone directory table of the information storage section 26 of the cellular telephone 10B, a user name of "Suzuki-san", mail address of suzukisan@docomo.ne.jp, and image data of the user of the cellular telephone 10A are only registered in association with the telephone number of "090-1111-XXXX" of the cellular telephone 10A. It is further assumed that the communication function table as shown in FIG. 5 is registered with the information storage section 43 of the switching section 13.

When the cellular telephone 10A places a call to the cellular telephone 10B, the cellular telephone 10B is designated as a communicating party from a user of the cellular telephone 10A via the operation section 25. Then, when a call instruction is input from the operation section 25, as shown in FIG.6, a connection request is transmitted to the switching section 13A from the cellular telephone 10A (step (hereinafter, referred to as "ST") 1).

Upon receiving the connection request, the switching apparatus 13A determines whether the cellular telephone 10A is set to notify the originating number (ST2). As shown in FIG.5, the cellular telephone 10A (090-1111-XXXX) is set to notify the originating number. Therefore, the switching apparatus 13A next determines communication functions usable in the cellular telephone 10A (ST3). Herein, as shown in FIG.5, as the communication functions usable in the cellular telephone 10A, determined are the videophone function, specific mail function and specific reception function.

When the communication functions of the cellular telephone 10A are determined, the switching apparatus 13A transfers the connection request to the switching apparatus 13B (ST4). The connection request includes the communication functions usable in the cellular telephone 10A determined in ST3. By the connection request, the switching apparatus 13B is notified that the cellular telephone 10A supports the videophone function, specific mail function and specific reception function.

Upon receiving the connection request, the switching apparatus 13B determines whether the cellular telephone 10B can display communication functions usable in another cellular telephone 10 (ST5). As described above, the cellular telephone 10B can display communication functions usable in another cellular telephone 10. When the cellular telephone 10B is determined to be able to display communication functions usable in another cellular telephone 10, the switching apparatus 13B transfers the connection request to the cellular telephone 10B (ST6). As in the connection request transferred in ST4, the connection request includes the communication functions usable in the cellular telephone 10A determined in ST3.

Upon receiving the connection request, the cellular telephone 10B transmits a connection response indicating the reception of the connection request to the switching apparatus 13B (ST7). Concurrently with the transmission of the connection response, the display section 23 of the cellular telephone 10B displays the communication functions usable in the cellular telephone 10A (ST8). More specifically, the display section 23 of the cellular telephone 10B displays icons representing that the cellular telephone 10A supports the videophone function, specific mail function and specific reception function.

Upon receiving the connection response, the switching apparatus 13B determines whether the cellular telephone 10B is set to notify the originating number (ST9). As shown in FIG.5, the cellular telephone 10B (090-1111-YYYY) is set to notify the originating number. Therefore, the switching apparatus 13B next determines communication functions usable in the cellular telephone 10B (ST10). Herein, as shown in FIG.5, as the communication functions usable in the cellular telephone 10B, determined are the videophone function and specific mail function.

When the communication functions of the cellular telephone 10B are determined, the switching apparatus 13B transfers the connection response to the switching apparatus 13A (ST11). The connection response includes the communication functions usable in the cellular telephone 10B determined in ST10. By the connection response, the switching apparatus 13A is notified that the cellular telephone 10B supports the videophone function and specific mail function.

Upon receiving the connection response, the switching apparatus 13A transfers the connection response to the cellular telephone 10A (ST12). As in the connection response transferred in ST11, the connection response includes the communication functions usable in the cellular telephone 10B determined in ST10. Upon receiving the connection response, the display section 23 of the cellular telephone 10A displays the communication functions usable in the cellular telephone 10B (ST13). More specifically, the display section 23 of the cellular telephone 10A displays icons representing that the cellular telephone 10B supports the videophone function and specific mail function.

When the cellular telephone 10A receives the connection response from the cellular telephone 10B, calling processing is started between the cellular telephones (ST14). During the calling processing, display sections 23 of both the cellular telephones 10 display the communication functions usable in the cellular telephone 10 of the communicating party. Then, after finishing the calling processing, in the cellular telephone 10A, the communication functions usable in the cellular telephone 10B are registered with the telephone directory data in the information storage section 26 (ST15). Concurrently with the registration, in the cellular telephone 10B, the communication functions usable in the cellular telephone 10A are registered with the telephone directory data in the information storage section 26 (ST16).

In addition, in ST15 and ST16, when the communication functions usable in the cellular telephone 10 of the communicating party are registered with the telephone directory table, it is preferable registering only a communication function (s) usable in the cellular telephone 10 of the communicating party that is not registered before making a call as shown in FIG.6. In this case, since a communication function is registered when the communication function usable in the cellular telephone 10 of the communicating party has not been registered, it is possible to prevent a communication function usable in the cellular telephone 10 of the communicating party from being registered indiscriminately.

When it is determined in ST5 that the cellular telephone 10B cannot display any communication functions of another cellular telephone, as shown in FIG.7, the connection request transferred from the switching apparatus 13B to cellular telephone 10B does not include the communication functions usable in the cellular telephone 10A determined in ST3. Further, in this case, when the connection response is received from the cellular telephone 10B, the switching apparatus 13B does not perform determination of setting of originating number notification (ST9) and determination of communication function(ST10). Therefore, neither the connection response transferred from the switching apparatus 13B to switching apparatus 13A (ST11) nor the connection response transferred from the switching apparatus 13A to cellular telephone 10A (ST12) includes the communication functions usable in the cellular telephone 10B. In this case, the calling processing is performed while the display sections 23 of the cellular telephones 10A and 10B do not display the communication functions of the communicating party (ST14).

In addition, in ST2 as shown in FIG.6, when the cellular telephone 10A is not set to notify the originating number, the determination of the communication function usable in the cellular telephone 10A is not made in subsequent ST3, and the connection request is transferred to switching apparatus 13B. Then, upon receiving the connection response in the cellular telephone 10A from the cellular telephone 10B in response to the connection request, the calling processing is performed while the display sections 23 of the cellular telephones 10A and 10B do not display the communication functions of the communicating party. Further, the similar processing is performed when the cellular telephone 10B is not set to notify the originating number in ST9.

Thus, in this embodiment, by the cellular telephone 10 setting notification of the originating number, it is possible to switch between permission and rejection of notification of the communication functions usable in the cellular telephone 10. By setting the notification of the originating number, it is possible to switch between the presence and absence of notification of the usable communication functions, and it is thus possible to prevent the usable communication functions from being notified to a communicating party having no need of being notified. In addition, the information for switching between permission and rejection of notification of the usable communication functions is not limited thereto, and is capable of being modified as appropriate.

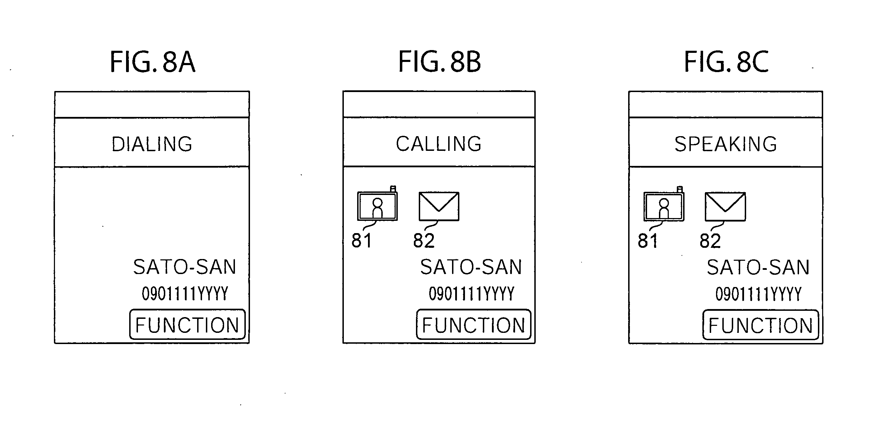

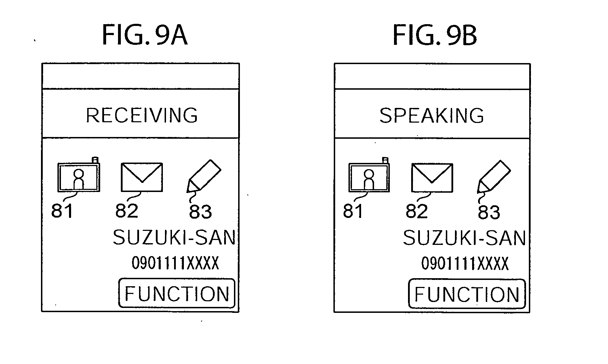

Described next are configuration examples of a screen displayed in the display section 23 of each of the cellular telephones 10A and 10B in the sequence as shown in FIG.6, with reference to FIGs. 8 and 9. FIG.8 shows configuration examples of the screen displayed in the display section 23 of the cellular telephone 10A, and FIG.9 shows configuration examples of .the screen displayed in the display section 23 of the cellular telephone 10B.

In the display section 23 of the cellular telephone 10A, as shown in FIG.6, when the cellular telephone 10B is designated as a communicating party from the user and a call instruction is input, as shown in FIG.8A, a message indicating "dialing" is displayed, while the user name "Sato-san" of the cellular telephone 10B and its telephone number "090-1111-YYYY" are displayed. Then, when the connection response including the communication functions usable in the cellular telephone 10B is received in ST12 in FIG.6, in ST13, as shown in FIG.8B, a message indicating "calling" is displayed, and as well as the user name and telephone number, an icon 81 representing the videophone function and an icon 82 representing the specific mail function are displayed. Further, when the calling processing is started in ST14 as shown in FIG.6, as shown in FIG.8C, a message indicating "speaking" is displayed, while the icons 81 and 82 are still displayed.

Meanwhile, in the display section 23 of the cellular telephone 10B, when the connection request including the communication functions usable in the cellular telephone 10A is received in ST6 as shown in FIG.6, in ST8, as shown in FIG.9A, a message indicating "receiving" is displayed, while the user name "Suzuki-san" of the cellular telephone 10A and its telephone number "090-111-XXXX are displayed, and displayed further are the icon 81 representing the videophone function, icon 82 representing the specific mail function and an icon 83 representing the specific reception function. Then, when the calling processing is started in ST14 as shown in FIG.6, as shown in FIG.9B, the message indicating "speaking" is displayed, while the icons 81, 82 and 83 are still displayed.

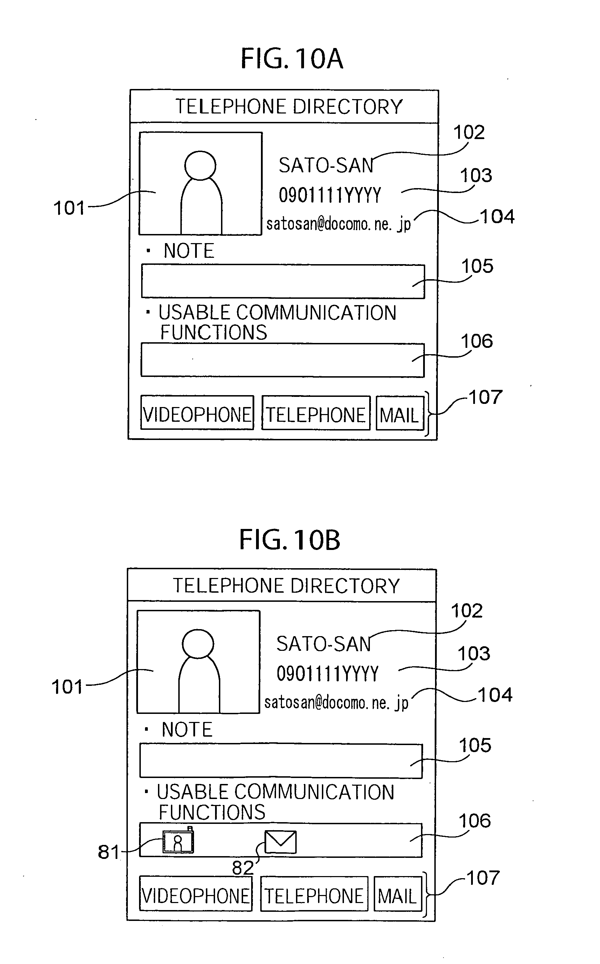

Then, after finishing the calling processing, in ST15, in the cellular telephone 10A, the communication functions usable in the cellular telephone 10B displayed in ST13 are registered with the telephone directory table of the information storage section 26. FIG.10 includes diagrams to explain descriptions of the telephone directory data of the cellular telephone 10B in the cellular telephone 10A before and after making a call according to the sequence as shown in FIG.6. Herein, for convenience in description, a screen of the telephone directory data displayed in the display section 23 is used for the explanation.

In the screen of the telephone directory data, as shown in FIG.10, image data 101 of the user of the cellular telephone 10B, user name 102, telephone number 103 and mail address 104 are displayed, while a field of note 105, a field of usable communication function 106, and function buttons 107 are further displayed. Particularly, in FIG. 10, the case is shown that a videophone button, telephone button and mail button are displayed as the function buttons 107.

Before making a call as shown in FIG.6, when the telephone directory data of the cellular telephone 10B is displayed, a screen of the telephone directory data as shown in FIG.10A is displayed in the display section 23. In other words, any communication functions usable in the cellular telephone 10B are not registered with the field of usable communication function 106. However, after making the call as shown in FIG.6, since the communication functions usable in the cellular telephone 10B are registered in ST15, when the telephone directory data of the cellular telephone 10B is displayed, a screen of the telephone directory data as shown in FIG.10B is displayed in the display section 23. In other words, the icon 81 representing the videophone function and the icon 82 representing the specific mail function are added to the field of usable communication function 106.

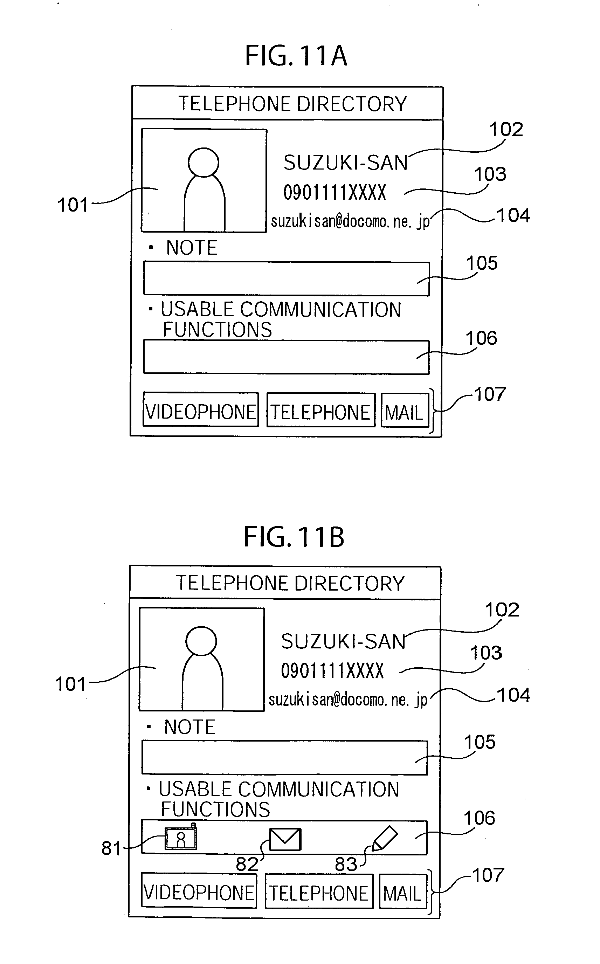

Similarly, after finishing the calling processing, in the cellular telephone 10B, the communication functions usable in the cellular telephone 10A displayed in ST8 are registered with the telephone directory table in the information storage section 26. FIG.11 includes diagrams to explain descriptions of the telephone directory data of the cellular telephone 10A in the cellular telephone 10B before and after making a call according to the sequence as shown in FIG.6. Herein, for convenience in description, as in FIG.10, a screen of the telephone directory data displayed in the display section 23 is used for the explanation. In addition, in FIG.11, the same components as in FIG.10 are assigned the same reference numerals to omit descriptions thereof.

Before making a call as shown in FIG.6, when the telephone directory data of the cellular telephone 10A is displayed, a screen of the telephone directory data as shown in FIG.11A is displayed in the display section 23. In other words, any communication functions usable in the cellular telephone 10A are not registered with the field of usable communication function 106. However, after making the call as shown in FIG.6, since the communication functions usable in the cellular telephone 10A are registered in ST16, when the telephone directory data of the cellular telephone 10A is displayed, a screen of the telephone directory data as shown in FIG.11B is displayed in the display section 23. In other words, the icon 81 representing the videophone function, the icon 82 representing the specific mail function and the icon 83 representing the specific reception function are added to the field of usable communication function 106.

Thus, according to the communication system according to this embodiment, when a communication request is transmitted from the cellular telephone 10A on the calling side, the switching apparatus 13 notifies the communication functions usable in each of cellular telephones 10 respectively on the calling and receiving sides to the cellular telephone 10 of the communicating party, and the communication functions usable in the cellular telephone 10 of the communicating party are displayed in each of the cellular telephones 10. It is thereby possible for the user to easily grasp the communication functions usable in the cellular telephone 10 of the communicating party. Further, since the communication functions usable in the cellular telephone 10 of the communicating party are registered after finishing the communication, the user is capable of grasping the communication functions usable in the cellular telephone 10 of the communicating party also in subsequent communication, and it is thus possible to promote use of the communication functions.

Further, according to the communication system according to this embodiment, since each of the cellular telephones 10 on the calling and receiving sides displays in icon the communication functions usable in the cellular telephone 10 of the communicating party notified from the switching apparatus 13, the user is capable of grasping the communication functions usable in the cellular telephone 10 of the communicating party through intuition.

Furthermore, according to the communication system according to this embodiment, the switching apparatus 13 notifies the cellular telephone 10 of the communicating party of the communication functions when notification of the communication functions usable in the cellular telephone 10 on the calling side or receiving side is permitted. It is thereby possible to switch between the presence and absence of notification of the usable communication functions according to an instruction from a user, and it is thus possible to prevent the usable communication functions from being notified to a communicating party having no need of being notified.

In addition, the present invention is not limited to the above-mentioned embodiment, and is capable of being carried into practice with various modifications thereof within the scope of inhibiting the effects of the invention. Further, the present invention is capable of being carried into practice with various modifications thereof without departing from the scope of the purpose of the invention.

For example, the above-mentioned embodiment describes the case that the switching apparatus 13 installed onto the cellular telephone network 12 is provided with the communication function table, but a configuration to provide the communication function table is not limited thereto, and is capable of being modified as appropriate. For example, the communication function table may be provided in a server apparatus installed onto the cellular telephone network 12 independently of the switching apparatus 13. Also in the case of providing the server apparatus with the communication function table, it is possible to obtain the same effects as in the above-mentioned embodiment.

Further, the above-mentioned embodiment describes the case that the cellular telephones 10A and 10B perform general calling processing, and then, display the communication functions in the cellular telephones 10B and 10A as a communicating party to register, respectively, but the processing performed prior to display and registration of the communication function of the cellular telephone 10 of the communicating party is not limited thereto. For example, the communication functions of the cellular telephones 10A and 10B as the communicating party may be displayed and registered in the case of performing videophone calling processing using the above-mentioned videophone function.

## Claims

1. A communication system having a plurality of communication terminal apparatuses(10) connected on a communication network (12), and a management apparatus(13) that manages communication functions usable in the plurality of communication terminal apparatuses(10),
wherein when the management apparatus (13) receives a communication request from a communication terminal apparatus on a calling side (10A), the management apparatus(13) determines communication functions usable in the communication terminal apparatus on the calling side(10A) to notify a communication terminal apparatus on a receiving side(10B), while determining communication functions usable in the communication terminal apparatus on the receiving side (10B) to notify the communication terminal apparatus on the calling side(10A), and
the communication terminal apparatus on each of the calling side and the receiving side(10A,10B) displays the communication functions usable in the communication terminal apparatus of the communicating party (10B,10A) notified from the management apparatus(13), while registering the communication functions usable in the communication terminal apparatus of the communicating party (10B,10A) after finishing communication with the communication terminal apparatus of the communicating party(10B,10A).

2. The communication system according to claim 1, wherein the communication terminal apparatus on each of the calling side and the receiving side(10A,10B) displays the communication functions usable in the communication terminal apparatus of the communicating party(10B,10A) notified from the management apparatus(13), using icons.

3. The communication system according to claim 1, wherein the management apparatus(13) notifies the communication terminal apparatus of the communicating party (10B, 10A) of the communication functions when notification of the communication functions usable in the communication terminal apparatus on the calling side or the receiving side (10A, 10B) is permitted.

4. The communication system according to claim 1, wherein the communication terminal apparatus on the calling side and the receiving side (10A,10B) registers a communication function usable in the communication terminal apparatus of the communicating party (10B, 10A) when the communication function is not registered.

5. A communication function information display method using a plurality of communication terminal apparatuses(10) connected on a communication network(12), and a management apparatus(13) that manages communication functions usable in the plurality of communication terminal apparatuses(10),
wherein when the management apparatus (13) receives a communication request from a communication terminal apparatus on a calling side(10A), the management apparatus(13) determines communication functions usable in the communication terminal apparatus on the calling side(10A) to notify a communication terminal apparatus on a receiving side(10B), while displaying the communication functions usable in the communication terminal on the calling side(10A) in the communication terminal apparatus on the receiving side (10B),
further determines communication functions usable in the communication terminal apparatus on the receiving side(10B) to notify the communication terminal apparatus on the calling side(10A), while displaying the communication functions usable in the communication terminal apparatus on the receiving side(10B) in the communication terminal apparatus on the calling side (10A), and
registers the communication functions usable in the communication terminal apparatus of the communicating party with the communication terminal apparatus(10B,10A) on each of the calling side and the receiving side (10A, 10B) after finishing communication.

6. The communication function information display method according to claim 5, wherein using icons, the communication functions usable in the communication terminal apparatus of the communicating party (10B, 10A) notified from the management apparatus(13) are displayed in the communication terminal apparatus on each of the calling and the receiving side(10A, 10B).

7. The communication function information display method according to claim 5, wherein the management apparatus(13) notifies the communication terminal apparatus of the communicating party(10B,10A) of the communication functions when notification of the communication functions usable in the communication terminal apparatus on the calling side or the receiving side(10A,10B) is permitted.

8. The communication function information display method according to claim 5, wherein a communication function usable in the communication terminal apparatus of the communicating party (10B, 10A) is registered with the communication terminal apparatus on each of the calling side and the receiving side (10A, 10B) when the communication function is not registered.
